Europäisches Patentamt

European Patent Office

Office européen des brevets

(19)

(11) Publication number: **0 100 284**
A2

(12)

# EUROPEAN PATENT APPLICATION

(21) Application number: **83401551.3**

(51) Int. Cl.³: **F 16 C 32/00, G 11 B 15/00**

(22) Date of filing: **28.07.83**

(30) Priority: **28.07.82 US 402463**

(71) Applicant: **SANGAMO WESTON, INC., 180 Technology Drive, Norcross Georgia 30092 (US)**

(72) Inventor: **Hackathorn, Michael F., 3423 Clark Road, Apt. 223 Sarasota Florida 33581 (US)**
Inventor: **Cox, Preston L., 4149 Murdock Avenue, Sarasota Florida 33581 (US)**
Inventor: **Mumby, Warren, 1400 Rialto, Venice Florida 33595 (US)**

(43) Date of publication of application: **08.02.84**
**Bulletin 84/6**

(74) Representative: **Chareyron, Lucien et al, Schlumberger Limited 42, rue Saint-Dominique, F-75340 Paris Cedex 07 (FR)**

(84) Designated Contracting States: **DE FR GB IT NL**

(54) **Piezoelectric bearing element.**

(57) A virtually frictionless bearing element for use in a tape transport is formed from a piezoelectric material, with the tape being disposed proximate a surface of the piezoelectric bearing element. An ultrasonic signal (approximately 70 KHz) is applied to the bearing element causing the piezoelectric material to expand and contract at the signal rate. The vibrations cause a thin film of air to be generated at the surface of the bearing element over which the tape can pass with virtually no friction or wear. Roller inertia and flutter which are associated with ordinary roller-type bearing elements are eliminated since the only moving part is the tape itself. The bearing element can also be combined with a magnetic transducer to form a frictionless magnetic record/reproduce head.

## PIEZOELECTRIC BEARING ELEMENT

### Background of the Invention

#### Field of the Invention

The invention relates to field of bearing elements, and more particularly to a bearing element formed from a piezoelectric material useful in supporting a moving web of material.

#### Description of the Prior Art

In the tape recording art it has long been the practice to use cylindrical rollers as bearing elements and guides. These rollers are used to contact a moving web of magnetic tape and aid in translating the tape from one direction to another, such as from a supply reel, past a recording/pickup head and to a take-up reel.

In a tape recorder it is desirable that the tape speed be maintained as constant as possible to ensure high accuracy in both recording and playback modes. As is well known, any inaccuracy in the surface configuration of such rollers can lead to mechanical oscillation and vibration which is then conveyed to the moving tape. The result is that the speed of the tape will fluctuate slightly at the frequency of the vibration of the roller. This so-called "flutter" causes a corresponding corruption of the signal or data being recorded or played back on the tape. Flutter can also be induced by vibrations transmitted from other sources, such as drive motors, to the rollers or tape. It will be appreciated that in high speed data recorders operating at in excess of 100 inches per second of tape speed and data frequencies of in excess of 10MHz that even minor fluctuations in the tape speed caused by roller induced flutter will result in unacceptable recording characteristics.

One approach to the flutter problem is the obvious expedient of accurately machining the rollers as round as possible. However, this approach is costly, especially in view of the sometimes dozens of rollers and roller-type guides used in a single tape machine. Further, even if a roller is machined almost perfectly round it will still have an inherent mechanical resonant frequency which, if it matches the frequency of other mechanical elements of the tape

machine, will cause the roller to vibrate and induce further flutter in the tape.

In addition, all mechanical rollers have inertia which must be overcome upon start-up of the tape driving system or upon large changes in the speed of the tape. In recorders having a large number of such roller bearing elements the inertia of the entire system is not inconsequential and can result in tape stretching or unacceptable tape speed variations during start-up or tape speed change operations. Roller inertia can be reduced by reducing the mass of the roller, e.g. by using lighter materials and/or forming the roller as a thin shell supported by a spindle type rotor, rather than being formed as a solid cylindrical mass. However, these approaches to inertia reduction are costly since special light-weight, yet machinable, alloys must be used in conjunction with costly extrusion processes to form this type of low-inertia roller structure.

A second approach to the flutter problem is to provide a compressible elastomer coating on the surface of a roller. The compressible surface helps to absorb vibration induced in the tape from various sources. However, the coating is costly to apply and the roller and coated surface still must be machined substantially round. In addition, this approach does nothing to reduce or eliminate the problems associated with roller inertia.

A further problem with contacting type bearing elements is that since the moving web of material is in contact with the surface of the bearing element there is always some surface friction and abrasion therebetween. In a moving web of magnetic tape, such repeated abrasions will eventually cause the oxide coating thereon to flake and eventually will render the tape unusable.

It is also known to provide a hollow bearing member with an air porous surface with the interior of the bearing member connected to a source of positive air pressure. This causes an outwardly directed flow of air perpendicular to the porous surface of the bearing member. A moving web of material which would otherwise engage the surface of the bearing member is supported out of contact with the surface of the bearing member due to the outward air flow. However, such a device could not readily replace mechanical rollers

in a tape recorder environment due to the complexity and cost of providing each of the plurality of rollers of bearing surfaces with an air porous surface and a source of pressurized air.

## Summary of the Invention

It is a general object of the present invention to provide an improved bearing element for a moving web of material.

This and other objects are achieved by one aspect of the present invention wherein there is provided an inertialess and virtually frictionless bearing element for use with a web of material comprising a bearing element formed from a piezoelectric material, with the web of material (such as magnetic tape) being arranged proximate with at least a portion of a surface of the bearing element, and means for causing the piezoelectric material to vibrate at a frequency effective to establish a layer of air between the bearing element and the web of material.

More particularly, the bearing element is planar or is in the form of at least a section of surface of revolution, such as a cylinder, and is electrically driven at an ultrasonic frequency (e.g. 50-100 KHz). Under such an electrical drive signal the surfaces of the piezoelectric material expand and contract causing a thin lay of air to be trapped between the surface of the bearing element and the web of material.

Alternatively, the bearing element can take the form of a layer of piezoelectric material disposed over a substrate or base formed from a different material. The bearing element can also be incorporated as part of a magnetic tape transducer.

It will be appreciated that as the web of material is not in physical contact with the surface of the bearing element there is virtually no friction therebetween. The only friction present will be due to non-laminar (turbulent) airflow between the moving web and the surface of the bearing element. However, this friction is so small as to be negligible, so that in practice the coefficient of friction between the bearing element and the moving web is

essentially zero. This arrangement has a further advantage in that wear and degradation of the surface of the web is eliminated since the web does not contact the bearing element.

A further advantage of the invention is that since the bearing element is not in contact with the moving web the inertia of the bearing element cannot affect the operation or movement of the web.

In addition, unlike rotating mechanical bearing elements, the bearing element of the present invention need not be machined perfectly round and indeed can be formed in any shape (flat, arcuate, etc.) having a relatively smooth bearing surface.

Brief Desception of the Drawing Figures

These and other features and advantages of the present invention will be appreciated from the following detailed description of the preferred embodiments, when taken in conjunction with the drawing figures wherein:

Fig. 1 is a cross-section view of one embodiment of the invention;

Fig. 2 is a cross-section view of a second embodiment of the invention;

Fig. 3 is a perspective view of one embodiment of the invention used as a parallel level translating device; and

Fig. 4 is a cross-section view of a third embodiment of the invention incorporated into a magnetic record/playback head.

Detailed Description of the Preferred Embodiments

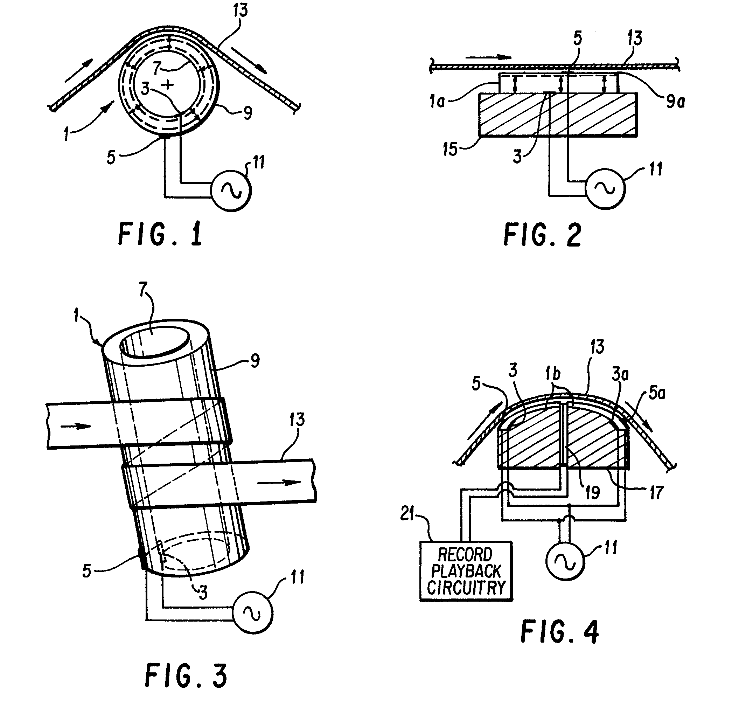

Referring to Fig. 1, in one embodiment the bearing element of the present invention takes the form of a cylinder 1 formed from a piezoelectric material such as lead zirconate - titanate ceramic. A pair of electrodes 3 and 5 are applied respectively to the inner surface 7 and outer surface 9 of bearing element 1. Electrodes 3 and 5 are connected to a driving means, comprising a source of alternating current 11.

Disposed proximate to at least a portion of the outer surface 9 of bearing element 1 is a web of material 13. Web 13 is, for example, a magnetic tape which is being moved in a well-known fashion from a supply reel to a take-up reel of a tape recorder (not shown).

Upon application of an electrical signal of predetermined frequency (for example 70KHz) from driving means 11, the piezoelectric material of bearing 1 radially expands and contracts (shown by arrows and dashed lines in Fig. 1) at a particular frequency. This rapid expansion and contraction of the surface of the bearing element causes a thin film or layer of air to be entrapped between surface 9 of element 1 and web 13. It will be appreciated that this layer of entrapped air acts as a virtually frictionless cushion between bearing element 1 and web 3 to prevent contact therebetween. This phenomenon occurs regardless of whether web 13 is moving or stationary with respect to the bearing element.

The particular frequency chosen to drive bearing element 1 depends on the resonant frequency of the element, which in turn depends on several factors such as the nature of the piezoelectric material chosen and the density of the surrounding medium (normally air). The thickness of the air layer between web 13 and surface 9 of bearing element 1 depends on the amplitude of radial motion of the piezoelectric material (which in turn depends on its resonant frequency), the amplitude of the applied drive signal, and the tension on the web.

It is not necessary for bearing element 1 to be cylindrical in shape in order to generate an air cushion for the web. Indeed, surfaces of almost any arcuate or planar configuration can be used. In addition, bearing element 1 need not be formed as a solid mass but can comprise a thin layer of piezoelectric material attached in a conventional fashion to a substrate formed from a different material. For example, in Fig. 2 piezoelectric bearing element 1a is bonded to a non-piezoelectric substrate 14. Bearing element 1a is planar in form and is driven by AC source 11 via electrodes 3 and 5 as in Fig. 1. When so driven, a thin cushion of air is formed between the upper surface 9a of bearing element 1a and web 13.

In Fig. 3 there is shown the bearing element depicted in Fig. 1 being used as a parallel web translation device. It is frequently desirable, such as in tape recorders of the type having coaxially mounted supply and take-up reels, to translate the tape from one level to another while keeping the motion of the various sections of the tape parallel to one another. To accomplish this, the axis of cylindrical bearing element 1 is canted slightly from perpendicular with respect to the direction of motion of web 13. Web 13 is wrapped around bearing element 1 such that both leading and trailing ends of the web are substantially parallel to each other. In such an arrangement, web 13 is supported on a cushion of air developed between it and surface 9 when bearing element 1 is driven by AC source 11.

Fig. 4 shows an embodiment of the present invention used as a frictionless tape transducer or record/playback head. Piezoelectric bearing element 1b takes the form of a section of an arcuate surface (for example an elliptical surface) and is bonded to a substrate formed from a non-piezoelectric material 17. A split-gap magnetic recording/playback head 19 of conventional design is disposed within substrate 17. Recording/playback head 19 is connected to record-playback circuitry 21 of conventional design. Bearing element 1b can be a single piece of piezoelectric material and merely have a cut-out portion for exposing tape head 19. Alternatively, the bearing element can be formed as two separate arcuate portions and the two sections are driven by AC source 11 via two pairs of electrodes 3, 5 and 3a, 5a. If a single piece of piezoelectric material is used, only one pair of electrodes 3 and 5 is needed.

It is of course possible to form not only bearing element 1b but substrate 17 as a single unitary body from a piezoelectric material.

From the foregoing it can be seen that the present invention provides an inertialess and virtually frictionless bearing element for a moving web of material. Since the surface of the bearing element is normally not in contact with the web, wear of the surface of the web is eliminated and the inertia of the bearing element can be ignored. When used as a bearing element in a tape recorder, the present invention greatly reduces or eliminates operating friction, wear on the tape, inertial effects due to start-up and tape speed changes, and totally eliminates flutter from being induced in the tape. The present invention can be used as a fixed bearing element or as a guide mounted on a pivoting arm, such as used for adjusting tape tension, or as part of a frictionless tape record/playback head.

- 7 -

While the present invention has been described in considerable detail, it is understood that various modifications would occur to one skilled in the art. The foregoing is not intended to be limitive but only illustrative of the invention which is defined by the appended claims.

- 8 -

What is claimed is:

1. An inertialess and virtually frictionless bearing element for use with a web of material characterized by:

a bearing element formed from a piezoelectric material, said web of material being arranged proximate with at least a portion of a surface of said bearing element; and

means for causing said piezoelectric material to vibrate at a frequency effective to establish a layer of air between said bearing surface and said web of material.

2. The invention of claim 1 characterized in that said bearing element is substantially planar in form.

3. The invention of claim 1 characterized in that said bearing element is in the form of at least a portion of a surface of revolution.

4. The invention of claim 3 characterized in that said bearing element is generally cylindrical in form.

5. The invention of any one of claims 1-4 characterized in that said vibrating means comprises means for electrically driving said bearing element.

6. The invention of any one of claims 1-5 characterized in that the surface of said bearing element is fixed with respect to said web.

7. The invention of any one of claims 1-6 characterized in that said piezoelectric material is attached to a substrate.

8. The invention of any one of claims 1-7 characterized in that said bearing element is driven at a frequency substantially in the range of 50 KHz to 100KHz.

0100284

- 9 -

9. The invention of any one of claims 1-8 characterized in that said bearing element comprises:

a tape head for use with a web of magnetic tape and formed from a piezoelectric material, said magnetic tape being arranged proximate with a surface of said tape head; and

a magnetic transducer element disposed in a portion of said tape head proximate to said surface and said magnetic tape.

10. The invention of claim 9 characterized in that said tape head surface proximate said magnetic tape is arcuate in shape.

FIG. 1

FIG. 2

FIG. 3

FIG. 4